Europäisches Patentamt

European Patent Office

Office européen des brevets

(19)

(11) Veröffentlichungsnummer: **0 130 223**
**B1**

(12) # EUROPÄISCHE PATENTSCHRIFT

(45) Veröffentlichungstag der Patentschrift:
02.11.88

(51) Int. Cl.⁴: **G 02 B 6/38,** H 01 P 1/20

(21) Anmeldenummer: **83106227.8**

(22) Anmeldetag: **25.06.83**

(54) Symmetrischer Wellenleiter-Koppler.

(43) Veröffentlichungstag der Anmeldung:
09.01.85 Patentblatt 85/2

(45) Bekanntmachung des Hinweises auf die Patenterteilung:
02.11.88 Patentblatt 88/44

(84) Benannte Vertragsstaaten:
**BE DE FR GB IT NL**

(56) Entgegenhaltungen:
**FR-A-2 501 383**
**US-A-3 589 794**
**US-A-3 957 341**

**ISSA 55, no. 3, pp. 261-271**
**Hower Morgan Optical Fibre Comm., pp. 172/173**

(73) Patentinhaber: **ANT Nachrichtentechnik GmbH,**
**Gerberstrasse 33, D-7150 Backnang (DE)**

(72) Erfinder: **Unger, Hans- Georg, Prof. Dr.- Ing.,**
**Wöhler Strasse 10, D-3300 Braunschweig (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die vorliegende Erfindung betrifft einen Wellenlängen-Multiplexer bzw. -Demultiplexer, der mindestens einen Wellenleiter-Koppler besitzt, welcher aus zwei im Abstand nebeneinander geführten planaren dielektrischen Wellenleitern gleicher Brechzahl besteht, wobei die Querschnitte der Wellenleiter ihre Brechzahl, ihr gegenseitiger Abstand im Koppelbereich, wo sie nebeneinander geführt sind, und die Länge des Koppelbereichs so dimensioniert sind, daß in zwei getrennte Arme des Wellenleiter-Kopplers eingespeiste Signalwellen unterschiedlicher Wellenlängen in einem Arm zusammengeführt bzw. in einen Arm des Wellenleiter-Kopplers eingespeiste Signalwellen unterschiedlicher Wellenlängen auf zwei getrennte Arme wellenlängenselektiv aufgeteilt werden.

In optischen Nachrichtensystemen, die mit Wellenlängenmultiplex arbeiten, müssen optische Signale verschiedener Wellenlänge aus getrennten Quellen zur Übertragung in einem Wellen leiter zusammengeführt werden; ebenso müssen sie im Empfänger wieder voneinander getrennt werden. Innerhalb der Durchlaß-Bandbreite der Wellenleiter erfolgt die Übertragung der einzelnen Wellen bekanntlich nahezu ungedämpft, während sie außerhalb entsprechend der Übertragungscharakteristik unterdrückt werden. Auch beim Gegensprechbetrieb mit einem optischen Wellenleiter für beide Richtungen braucht man solche Multiplexer, hier aber als Sende-Empfangs-Duplexer.

Mehrfachausnutzung eines Übertragungsmediums mit verschiedenen trägerfrequenten Signalen im Frequenzmultiplex kommt auch bei Mikrowellen in Frage, wofür dann Multiplexer und Demultiplexer bzw. Sende-Empfangs-Duplexer für die jeweiligen Mikrowellen eingesetzt werden müssen.

Für einwellige (die Faser überträgt dabei möglichst nur eine Welle, sog. Monomode-Betrieb) Fasersysteme sollen die Multi-und Demultiplexer möglichst einfach mit planaren Wellenleitern aufgebaut werden, damit sie sich für eine integrierte Optik eignen. Aber auch für Mikrowellen, insbesondere mm-Wellen, eignen sich dielektrische Wellenleiter oder Bildleitungen für einen planaren Aufbau.

Ein Wellenlängen-Multiplexer bzw. -Demultiplexer der einleitend dargelegten Art ist aus der US-A-3 957 341 bekannt. Der hierzu beschriebene Wellenlängen-Multiplexer bzw. -Demultiplexer besteht aus zwei im Abstand nebeneinander geführten planaren dielektrischen Wellenleitern, womit nur zwei Signalwellen verschiedener Wellenlängen zusammengeführt bzw. voneinander getrennt werden können.

Die Wellenlängenselektion wird bei diesem aus zwei Wellenleitern bestehendem Koppler dadurch erreicht, daß entweder beide Wellenleiter unterschiedlich dimensioniert sind und verschiedene Brechzahlen aufweisen oder daß sie unterschiedlich dimensioniert sind, aber gleiche Brechzahlen haben oder gleich dimensioniert sind, aber verschiedene Brechzahlen aufweisen.

Ein anderer aus der US-A-3 589 794 hervorgehender Koppler, dessen zwei planare Wellenleiter die gleiche Brechzahl besitzen und gleich breit sind, dient dazu, ein in einen Wellenleiter eingespeistes Signal leistungsmäßig auf zwei Wellenleiter aufzuteilen. Als Wellenlängen-Multiplexer bzw. -Demultiplexer ist dieser Koppler nicht ausgelegt.

Aus dem Journal of the optical Society of Amerika, Vol. 55, No. 3 März 1985 s. 261 - 271 geht hervor, daß die Lichtenergieverteilung in zwei miteinander gekoppelten runden Lichtleitfasern sinusförmig verläuft in Abhängigkeit von der effektiven Koppellänge (Produkt aus den Koppelkoeffizient und der Koppellänge). Dabei herrscht jeweils in einem der beiden Lichtleitfasern maximale Lichtenergie vor, wenn die Lichtenergie in dem anderen Lichtwellenleiter auf ein Minimum abgefallen ist, und umgekehrt.

Der Erfindung liegt nun die Aufgabe zugrunde, einen Wellenlängen-Multiplexer bzw. Demultiplexer der eingangs genannten Art anzugeben, der in der Lage ist, vier Signalwellen, von denen jede eine andere Wellenlänge hat, zusammenzuführen bzw. zu trennen, und der zu diesem Zweck möglichst einfach aufgebaut ist.

Diese Aufgabe wird nach der Erfindung durch die Merkmale des Anspruchs 1 gelöst.

Eine zweckmäßige Weiterbildung der Erfindung und eine vorteilhafte Anwendung gehen aus den Unteransprüchen hervor.

Anhand eines Ausführungsbeispieles soll im folgenden die Erfindung näher erläutert werden.

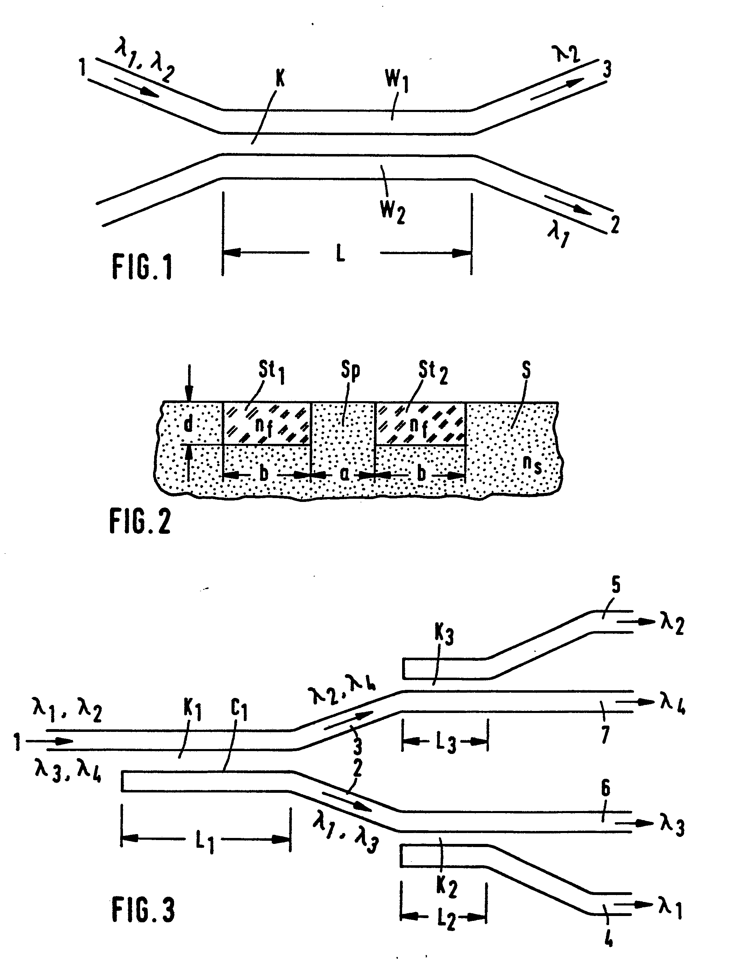

In der Figur 1 ist der bekannte symmetrische Wellenleiter-Koppler K dargestellt. Er besteht aus zwei gleichartigen Wellenleitern $W_1$, $W_2$, die miteinander über die Länge L gekoppelt sind. Mit 1 ist der Eingang der Anordnung bezeichnet, in welchen zwei Signalwellen der Wellenlängen $\lambda_1$ und $\lambda_2$ eingespeist werden. Am Arm 3 des Kopplers erscheint lediglich die Signalwelle der Wellenlänge $\lambda_2$ und am Arm 2 kann die Signalwelle der Wellenlänge $\lambda_1$ abgegriffen werden.

In der Figur 2 ist der Koppler der Fig. 1 im Ausschnitt dargestellt. Er ist aus dielektrischen Wellenleitern aufgebaut, die als planare Wellenleiter ausgebildet sind. Dies ist so realisiert, daß in dem Trägersubstrat S mit der Brechzahl $n_s$ im Abstand a zwei dielektrische Streifen $St_1$ und $St_2$ eingelassen sind. Die Brechzahl dieser Streifen ist $n_f$. Die Breite der beiden Streifen ist mit b und deren Dicke mit d bezeichnet. Beim dargestellten Ausführungsbeispiel der Fig. 2 sind die Streifen völlig in das Substrat eingelassen, so daß eine durchgehende ebene Oberfläche der Anordnung gegeben ist. Als "Koppelspalt" Sp wirkt somit das Substrat S zwischen den im Abstand angeordneten Streifen $St_1$ und $St_2$. Der Koppelkoeffizient zwischen den Grundwellen in den beiden Streifen ist näherungsweise

$$c - \frac{2V\sqrt{B}(1 - B)\exp(-V\sqrt{Ba/b})}{\beta b^2 [1 + 1/(V\sqrt{B})]}. \qquad (1)$$

In der Gleichung (1) sind $V = (2\pi b/\lambda)\sqrt{n_f^2 - n_s^2}$ der Wellenleiterparameter der Streifenleiter, $\beta$ die Phasenkonstante der koppelnden Wellen $\lambda$ und $B = [(\beta\lambda)^2/(2\pi)^2 - n_s^2]/((n_f^2 - n_s^2)$ ihr Phasenparameter. Schon aus dieser Näherung erkennt man die Funktion $\exp(-V\sqrt{Ba/b})$ als beherrschenden Faktor für den Koppelkoeffizienten. Ihr Exponent nimmt wegen $V \sim 1/\lambda$ mit wachsender Wellenlänge ab, denn die Abnahme von B mit zunehmender Wellenlänge ist im praktisch wichtigen Wellenlängenbereich weit schwächer. Weil der Exponent mit wachsender Wellenlänge $\lambda$ abnimmt, steigt die Exponentialfunktion dabei stark an, so daß auch der Koppelkoeffizient im entsprechenden Maße größer wird, und zwar ist seine relative Änderung mit der Wellenlänge $\lambda$

$$\frac{1}{c}\frac{dc}{d\lambda} \sim \sqrt{B}\frac{a}{b}, \qquad (2)$$

also um so stärker je größer der Exponent $V\sqrt{Ba/b}$ ist. Da V und B größenordnungsmäßig festliegen, wenn man mit der Grundwelle des planaren Wellenleiters im einwelligen Bereich arbeitet, kann man die relative Änderung des Koppelkoeffizienten mit der Wellenlänge $\lambda$ mit der relativen Breite a/b des Koppelspaltes zwischen den beiden planaren Wellenleitern einstellen.

Die Leistung, welche in den Arm 1 des Kopplers eingespeist wird koppelt vollständig auf den anderen Wellenleiter über und erscheint im Arm 2, wenn die effektive Koppellänge

$$cL = (m + \tfrac{1}{2})\pi \text{ mit } m \ 0, 1, 2... \qquad (3)$$

ist, also ein ungeradzahliges Vielfaches von $\pi/2$. Sie bleibt im Zugangswellenleiter bzw. koppel ganz auf ihn zurück und erscheint im Arm 3, wenn

$$cL = m\pi \qquad (4)$$

ist, also ein ganzzahliges Vielfaches von $\pi$. Im übrigen verlaufen die Ausgangsleistungen als Funktion von cL sinusförmig und zwar um $\pi/2$ gegeneinander versetzt.

Sollen vier Signalwellen der verschiedenen Wellenlängen $\lambda_1 < \lambda_2 < \lambda_3 < \lambda_4$ voneinander getrennt bzw. zusammengeführt werden, so ist ein dafür geeigneter Demultiplexer bzw. Multiplexer erfindungsgemäß entsprechend Fig. 3 aufzubauen. Der Koppler $K_1$ in der ersten Stufe dieses Demultiplexers ist so bemessen, daß sein Produkt aus Koppelkoeffizient $c_1$ und Länge $L_1$ bei den verschiedenen Signalwellenlängen folgende Bedingungen erfüllt:

$$\begin{aligned} c_1(\lambda_1) L_1 &= \tfrac{\pi}{2}, \\ c_1(\lambda_2) L_1 &= \pi, \\ c_1(\lambda_3) L_1 &= \tfrac{3\pi}{2}, \\ c_1(\lambda_4) L_1 &= 2\pi. \end{aligned} \qquad (7)$$

Dadurch treten die Signalwellen der Wellenlänge $\lambda_1$ und $\lambda_3$ im angekoppelten Wellenleiter der ersten Stufe am Arm 2 aus, während die Signalwellen der Wellenlängen $\lambda_2$ und $\lambda_4$ im durchgehenden Wellenleiter am Arm 3 austreten. Die an $K_1$ angeschlossenen Koppler $K_2$ und $K_3$ der zweiten Stufe sind ihrerseits so bemessen, daß ihre jeweiligen Produkte aus Koppelkoeffizienten $c_2$ bzw. $c_3$ und Länge $L_2$ bzw. $L_3$ die folgenden Bedingungen erfüllen:

$$\begin{aligned} c_2(\lambda_1) L_2 &= \tfrac{\pi}{2}, \\ c_2(\lambda_3) L_2 &= \pi, \\ c_3(\lambda_2) L_3 &\tfrac{\pi}{2}, \\ c_3(\lambda_4) L_3 &= \pi. \end{aligned} \qquad (8)$$

Unter diesen Bedingungen treten die vier verschiedenen in dem Arm 1 eingespeisten vier Signalwellen verschiedener Wellenlängen an den vier getrennten Armen 4, 5, 6 und 7 aus, so wie es in Fig. 3 eingetragen ist. Aufgrund ihrer Reziprozität wirkt auch diese Anordnung umgekehrt entsprechend als Multiplexer, um die Signalwellen mit den vier verschiedenen Wellenlängen in einen Wellenleiter zusammenzuführen.

## Patentansprüche

1. Wellenlängen-Multiplexer bzw. -Demultiplexer, der mindestens einen Wellenleiter-Koppler ($K_1$, $K_2$, $K_3$) besitzt, welcher aus zwei im Abstand nebeneinander geführten planaren dielektrischen Wellenleitern ($W_1$, $W_2$) gleicher Brechzahl ($n_f$) besteht, wobei die Querschnitte (d, b) der Wellenleiter ($W_1$ $W_2$), ihre Brechzahl ($n_f$), ihr gegenseitiger Abstand (a) im Koppelbereich, wo sie nebeneinander geführt sind, und die Länge (L) des Koppelbereichs so dimensioniert sind daß in zwei getrennte Arme des Wellenleiter-Kopplers ($K_1$, $K_2$, $K_3$) eingespeiste Signalwellen unterschiedlicher Wellenlängen ($\lambda_1$, $\lambda_2$, $\lambda_3$, $\lambda_4$) in einem Arm zusammengeführt bzw. in einen Arm des Wellenleiter-Kopplers ($K_1$, $K_2$, $K_3$) eingespeiste Signalwellen unterschiedlicher Wellenlängen auf zwei getrennte Arme wellenlängenselektiv aufgeteilt werden, dadurch gekennzeichnet, daß zur Zusammenführung bzw. Trennung von Signalwellen vier verschiedener Wellenlängen drei Wellenleiterkoppler ($K_1$, $K_2$, $K_3$) vorhanden sind; daß der erste Wellenleiter-Koppler ($K_1$), der in einem seiner Arme alle vier Wellenlängen ($\lambda_1$, $\lambda_2$, $\lambda_3$, $\lambda_4$) führt, so dimensioniert ist, daß seine effektive Koppellänge ($c_1L_1$) - das Produkt aus Koppelkoeffizient und Länge als Koppelbereich - für die längste ($\lambda_4$) der vier Wellenlängen ($\lambda_1$, $\lambda_2$, $\lambda_3$, $\lambda_4$) $2\pi$, für die zweitlängste Wellenlänge ($\lambda_3$) $3\pi/2$, für die drittlängste Wellenlänge ($\lambda_2$) $\pi$ und für die kürzeste Wellenlänge ($\lambda_1$) $\pi/2$ beträgt, daß ein Arm dieses ersten Wellenleiter-Kopplers ($K_1$) zusammen mit einem zusätzlichen planaren Wellenleiter den zweiten Wellenleiter-Koppler (k₂) bildet, der so dimensioniert ist, daß desen effektive Koppellänge (c₂ L₂) für die kürzeste Wellenlänge (λ₁) π/2 und für die zweitlängste Wellenlänge (λ₃) π beträgt, und daß ein anderer Arm des ersten Wellenleiterkopplers (K₁) zusammen mit einem weiteren zusätzlichen planaren Wellenleiter den dritten Wellenleiter- Koppler (K₃) bildet, der so dimensioniert ist, daß dessen effektive Koppellänge (C₃ L₃) für die drittlängste Wellenlänge (λ₂)π/2 und für die längste Wellenlänge (λ₄) π beträgt

2. Anordnung nach Anspruch 1, dadurch gekennzeichnet, daß alle planaren Wellenleiter den gleichen Querschnitt (b, d) haben.

3. Anordnung nach Anspruch 1, dadurch gekennzeichnet, daß sie Anwendung findet bei optischen Wellenlängen.

## Claims

1. Wavelength multiplexer and demultiplexer which has at least one waveguide coupler (K₁, K₂, K₃) composed of two spaced, juxtaposed, planar, dielectric waveguides (W₁, W₂) having the same index of refraction (n_f), with the cross sections (d, b) of the waveguides (W₁, W₂), their index of refraction (n_f), their mutual spacing (a) in the coupling region, where they are in juxtaposition, and the length (L) of the coupling region being dimensioned in such a manner that signal modes at different wavelengths (λ₁, λ₂, λ₃, λ₄) fed into two separate arms of the waveguide coupler (K₁, K₂, K₃) are brought together in one arm and signal modes at different wavelengths fed into one arm of the waveguide coupler (K₁, K₂, K₃) are wavelength selectively divided to two separate arms, characterised in that three waveguide couplers (K₁, K₂, K₃) are provided to combine or separate signal modes at four different wavelengths; the first waveguide coupler (K₁) which carries all four wavelengths (λ₁, λ₂, λ₃, λ₄) in one of its arms is dimensioned in such a manner that its effective coupling length (c₁L₁) - the product of coupling coefficient and length as the coupling region - is 2π for the longest one (λ₄) of the four wavelengths (λ₁, λ₂, λ₃, λ₄), 3π/2 for the second longest wavelength (λ₃), π for the third longest wavelength (λ₂) and π/2 for the shortest wavelength (λ₁); that one arm of this first waveguide coupler (K₁) together with an additional planar waveguide forms the second waveguide coupler (K₂) which is dimensioned in such a manner that its effective coupling length (c₂L₂) is π/2 for the shortest wavelength (λ₁) and π for the second longest wavelength (λ₃); and that another arm of the first waveguide coupler (K₁) together with a further additional planar waveguide forms the third waveguide coupler (K₃) which is dimensioned in such a manner that its effective coupling length (c₃L₃) is π/2 for the third longest wavelength (λ2) and π for the longest wavelength (λ₄).

2. Arrangement according to claim 1, characterized in that all planar waveguides have the same cross section (b, d).

3. Arrangement according to claim 1, characterised in that it is used for optical wavelengths.

## Revendications

1. Multiplexeur ou démultiplexeur de longueurs d'ondes, possédant au moins un coupleur à guides d'ondes (K₁, K₂, K₃) qui est constitué par deux guides d'ondes diélectriques (W₁, W₂) disposés l'un à côte de l'autre avec un intervalle et ayant le même indice de réfraction (n_f), les sections droites (d, b) des guides d'ondes (W₁, W₂), leur indice de réfraction (n_f), leur intervalle mutuel (a) dans la zone de couplage où ils passent l'un à côté de l'autre, et la longueur (L) de cette zone de couplage étant dimensionnés de manière que les ondes de signaux de longueurs d'onde differentes (λ₁, λ₂, λ₃, λ₄) introduites dans deux bras séparés du coupleur à guides d'ondes (K₁, K₂, K₃) soient regroupées dans un bras, ou que des ondes de signaux de longueurs d'onde différentes introduites dans un bras du coupleur à guides d'ondes (K₁, K₂, K₃) soient distribuées, avec sélection de longueurs d'ondes, sur deux bras séparés, caractérisé par le fait que trois coupleurs à guides d'ondes (K₁, K₂, K₃) sont prévus pour regrouper ou séparer des ondes de signaux de quatre longueurs d'onde différentes, par le fait que le premier coupleur à guides d'ondes (K₁), condusiant la totalité des quartre longueurs d'onde (λ₁, λ₂, λ₃, λ₄) dans l'un de ses bras, est dimentionné de manière que sa longueur de couplage efficace (c₁, L₁) - produit du coefficient de couplage et de la longueur de la zone de couplage - soit de 2π pour la plus grande (λ₄) des quartre longueurs d'onde (λ₁, λ₂, λ₃, λ₄), de 3π/2 pour la deuxième plus grande longueur d'onde (λ₃), π pour la troisième plus grande longueur d'onde /λ₂) et π/2 pour la plus courte longueur d'onde (λ₁), par le fait qu'un bras de ce premier coupleur à guides d'ondes (K₁) forme, conjointement avec un guide d'ondes supplémentaire plan, le deuxième coupleur à guides d'ondes (K₂) qui est dimensionné de manière que sa longueur de couplage efficace (c₂L₂) soit de π/2 pour la plus courte longueur d'onde (λ₁) et de π pour la deuxième plus grande longueur d'onde (λ₃), et par le fait qu'un autre bras du premier coupleur à guides d'ondes (K₁) forme, conjointement avec un autre guide d'ondes plan supplémentaire, le troisième coupleur à guides d'ondes (K₃), lequel est dimensionné de manière que sa longueur de couplage efficace (C₃L₃) soit π/2 pour la troisième plus grande longueur d'onde (λ₂) et de π pour la plus grande longueur d'onde (λ₄).

2. Agencement selon revendication 1, caractérisé par le fait que tous les guides d'ondes plans ont une section droite identique (b, d).

3. Agencement selon revendication 1, caractérisé par le fait qu'il est utilisable aux longueurs d'ondes optiques.

FIG.1

FIG.2

FIG.3